(19) Europäisches Patentamt
European Patent Office
Office européen des brevets

(11) EP 1 132 409 B1

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.$^7$: **C08F 4/64**, C08F 4/68

(21) Anmeldenummer: **01102829.7**

(22) Anmeldetag: **13.02.2001**

(54) **Katalysatorsysteme für die Ziegler-Natta-Olefin-Polymerisation**

Catalyst systems for the Ziegler-Natta-Olefin-Polymerisation

Système catalytique pour la polymérisation de Ziegler-Natta d' oléfines

(84) Benannte Vertragsstaaten:
**AT BE CH CY DE DK ES FI FR GB GR IE IT LI LU MC NL PT SE TR**

(30) Priorität: **08.03.2000 DE 10010796**

(43) Veröffentlichungstag der Anmeldung:
**12.09.2001 Patentblatt 2001/37**

(73) Patentinhaber: **MERCK PATENT GmbH**
**64293 Darmstadt (DE)**

(72) Erfinder:
- **Köhler, Katrin**
  **69221 Dossenheim (DE)**
- **Poetsch, Eike**
  **64367 Mühltal (DE)**
- **Schumann, Herbert**
  **12307 Berlin (DE)**
- **Dechert, Sebastian**
  **10115 Berlin (DE)**
- **Arnold, Manfred**
  **06667 Leissling (DE)**
- **Knorr, Jana**
  **06846 Dessau (DE)**
- **Kaminsky, Walter**
  **25421 Pinneberg (DE)**
- **Laban, Andre**
  **22459 Hamburg (DE)**

(56) Entgegenhaltungen:
**EP-A- 0 919 557**
**JP-A- 62 138 506**
**US-A- 5 468 707**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue Katalysatorsysteme, gekennzeichnet dadurch, daß Aluminiumalkyl-Komplexe der allgemeinen Formel (I), beschrieben in DE 19753135, durch Trägerung auf Magnesiumchlorid, $SiO_2$ oder $SiO_2$ in Kombination mit $MgCl_2$ in Gegenwart von Titan- oder Vanadiumhalogeniden sowohl als Cokatalysatoren aber gleichzeitig auch als Stereoselektivitätsvermittler in heterogenen Polymerisationen von α-Olefinen wirken.

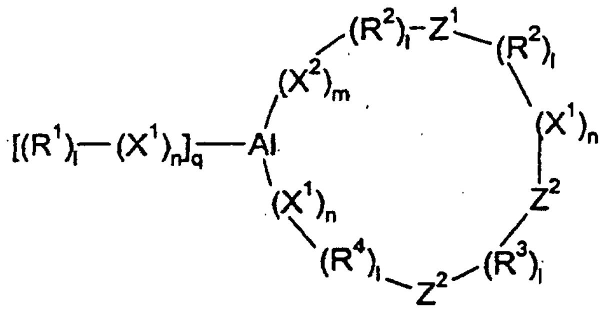

(I)

worin

$X^1$ NH, $NH_2$*, NH-A*, NH-$SiA_3$*, N-A, $NSiA_3$, $N(A)_2$*, $N(SiA_3)_2$*,O, $OSiA_2$, OA*, $OSiA_3$*, OAryl*, S, $SSiA_2$, SA*, $SSiA_3$*, PA, $PSiA_3$, $P(A)_2$*, $P(SiA_3)_2$*, oder Einfachbindung

$X^2$ NH, N-A, $NSiA_3$, O, $OSiA_2$, S, $SSiA_2$, PA oder $X^1$ komplex gebunden an $Al(R^1)_3$, oder Einfachbindung

$R^1$ H; Hal, wenn n = 0; A, gegebenenfalls kovalent gebunden an Al; $Si(A)_3$, wenn $X^1$ = O,

$R^2$ A, gegebenenfalls kovalent gebunden an Al;

$CH_2$-CH=CH, $CH_2$-C≡C für $Z^1$ = H;

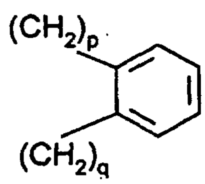

,

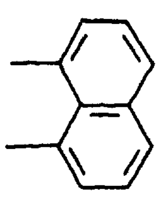

,

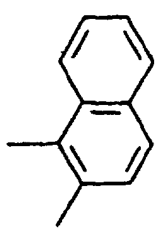

,

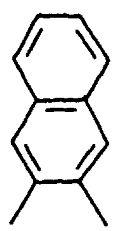

;

$R^3$ und $R^4$ unabhängig voneinander Bindung oder gleich $R^2$ oder $Si(A)_3$ oder $Si(A)_2$

$Z^1$ Bindung oder jeweils H gebunden an $R^2$

$Z^2$ Bindung oder jeweils H gebunden an $R^2$ und $R^3$
mit

A verzweigtes oder unverzweigtes $C_1$-$C_7$-Alkyl, -Alkyliden oder - Alkenyliden

Aryl Phenyl, Naphtyl, Indenyl, Fluorenyl

Hal F, Cl,

unabhängig voneinander

n 0,1,

m 0,1,

p 0, 1,

q 1, 2

l 0, 1

bedeuten, worin zwischen $X^1$, $X^2$ und Al koordinative Bindungen bestehen können, $R^1$, $R^2$, $R^3$, $R^4$, $X^1$, $X^2$, $Z^1$, und $Z^2$ jeweils unabhängig voneinander an unterschiedlichen Positionen im Molekül alle Bedeutungen annehmen können und $X^1$ nur die mit "*" gekennzeichneten Bedeutungen annehmen kann, wenn l = 0 und $R^1$, $R^2$, $R^3$ oder $R^4$ entfallen.

Die Ziegler-Natta-katalysierte Polymerisation ist ein Polymerisationsverfahren, das seit den initiierenden Arbeiten von Ziegler und Natta in den 50er Jahren über mehrere Generationen hinweg verbessert wird. Dabei sind sowohl die Steigerung der Aktivität als auch der Stereoselektiviät die treibenden Kriterien für die kontinuierliche Entwicklung des Katalysatorsystems. Das heutige etablierte System basiert auf der Verwendung eines Mehrkomponentenkatalysators. Neben dem Trägermaterial gehört dazu als eigentlicher Katalysator eine ÜbergangsmetallVerbindung, z. B. eine Titan-Verbindung, die erst durch Zugabe eines Aluminum-haltigen Cokatalysators aktiviert wird. Darüber hinaus werden notwendigerweise weitere Bestandteile wie interne und externe Donoren benötigt. Dabei verhindert der Einsatz eines internen Donors die Agglomeration der katalytisch aktiven Spezies, während der externe Donor die Stereospezifität bei der Verwendung prochiraler Olefine verbessert. So ermöglicht das System $MgCl_2$/Ester/$TiCl_4$/$AlEt_3$/PhSi$(OEt)_3$ bei der Polymerisation mit flüssigem Propen eine Produktivität von 600 [$kg_{PP}/g_{Ti}$] verbunden mit einer Isotaktizität von 98 %. Diese Katalysatorensysteme ersparen die kostenintensive Abtrennung von Katalysatorrückständen und die aufwendige Extraktion von ataktischen Anteilen aus den hergestellten Polyolefinen. Das mittlerweile erarbeitete Verständnis über den Zusammenhang zwischen Katalysator- und Polymermorphologie ermöglicht die Kontrolle der Polymermorphologie während des Polymerisationsprozesses, was zusätzliche verarbeitungstechnische Schritte wie Extrusion und Granulierung eliminiert. Die Fortschritte haben die lösemittelfreie Gasphasenpolymerisation und die Polymerisation in Masse erst möglich gemacht und zu wesentlichen Vereinfachungen bei der Suspensionspolymerisation geführt. [P. Galli, J. C. Haylock, *Makromol. Chem., Macromol. Symp.* **1992,** *63*, 19-54; P. Corradini, V. Buscio, G. Guerra, in *Comprehensive Polymer Science,* Vol. 4, G. Allen (Ed.), Pergamon Press, **1989,** S. 29; C. Jenny, P. Maddox, *Solid State* & *Mat. Science* **1998,** *3*, 94; K. Soga, T. Shiono, *Progress in Polymer Science* **1997,** *22,* 1503]

In DE 19753135 wurde eine Reihe von Aluminium-Verbindungen beschrieben, die sich durch eine intramolekulare Donor-Seitenkette auszeichnen, z.B. einer Amino-, Thio- oder Oxo-koordinierten Seitenkette, die sich nach dem Fachmann bekannten Methoden zur Darstellung Metallorganischer Verbindungen herstellen lassen. Diese Aluminium-Verbindungen wirken als cokatalytisch aktivierende Komponenten in Ziegler-Natta-Katalysatoren zur Polymerisation von Ethylen. Die Polymerisation von Propylen oder höheren $\alpha$-Olefinen gelingt jedoch mit den in dieser Patentanmeldung beschriebenen Katalysatorsystemen nicht. Auch wurden keine Katalysator-Träger verwendet, was den Einsatz in großtechnischen Anlagen erschwert oder unmöglich macht und sich zudem die gewünschte Polymermorphologie nicht einstellen läßt.

Neben dem ständigen Bestreben, aktivere und selektivere Katalysatorsysteme zu entwickeln, galt es folgende Faktoren zu verbessern:

a) Die großtechnisch verwendeten Katalysatorsysteme enthalten hochpyrophore, reaktive, flüchtige Aluminiumalkyl-Verbindungen als Cokatalysatoren insbesondere Triethylaluminium. Diese Verbindungen weisen eine hohe Sensibilität gegenüber Verunreinigungen im Reaktionsmedium auf, wie zum Beispiel gegenüber Restfeuchtigkeit der zu polymerisierenden Monomere. Zudem erfordert die sichere Handhabung solcher hochpyrophoren und flüchtigen Verbindungen aufwendige sicherheitstechnische Behälter für ihre Lagerung und für ihren Transport unter absolutem Sauerstoff- und Feuchtigkeitausschluß. Des weiteren müssen die großtechnischen Anlagen zur Katalysatorpräparation und Polymerisation auf diese Problematik ausgerichtet sein. Dies ist insbesondere ein Problem

für technisch weniger entwickelte Länder und Regionen, in denen aufgrund des Klimas hohe Temperaturen und hohe Luftfeuchtigkeiten herrschen.

b) Um die Ausbeute an Polymeren in der Olefinpolymerisation immer weiter steigern zu können, müssen Katalysatorsysteme mit höheren Aktivitäten maßgeschneidert und entwickelt werden. Die Aktivitätssteigerung sollte sich über eine Optimierung des Cokatalysators erreichen lassen, da er den Katalysator in die eigentlich katalytisch aktive Spezies überführt.

c) Um in der Ziegler-Natta-Katalyse von prochiralen Olefinen hohe Stereoselektivitäten zu erreichen, müssen zusätzlich kostenintensive externe Donoren wie z.B. $PhSi(OEt)_3$ eingesetzt werden. Die Eigenschaften (Taktizität und Molekulargewichtsverteilungen) der mittels externer Donoren erhaltenen Polymere konnte bislang noch nicht zur vollen Zufriedenheit optimiert werden, woraus ein ständiger Bedarf an Polymeren mit verbesserten Eigenschaften vorhanden ist.

d) Da üblicherweise der Cokatalysator in den Ziegler-Natta-Katalysatoren in hohen Überschüssen zum Katalysator eingesetzt wird und damit die kostenintensivste Komponente ist, besteht ein großes Interesse, das Cokatalysator-Katalysator-Verhältnis zu reduzieren unter Beibehaltung der Aktivitäten.

Aufgabe der vorliegenden Erfindung war es daher, Katalysatorsysteme zur Verfügung zu stellen, welche einerseits die unter a), b), c) und d) aufgezählten Nachteile nicht aufweisen und sowohl für die Polymerisation von Ethylen als auch von Propylen und höheren $\alpha$-Olefinen einsetzbar sind. Aufgabe der vorliegenden Erfindung war es auch, entsprechende Katalysatorsysteme, welche an geeignete Träger gebunden sind, in einfacher und preiswerter Weise zur Verfügung zu stellen. Die erfindungsgemäßen Katalysatorsysteme sollten dabei in großtechnischen Anlagen unter einfachen Bedingungen mit einem geringeren Cokatalysator-Katalysator-Verhältnis einsetzbar sein und dabei höhere Aktivitäten als bisher bekannte Systeme aufweisen. Aufgabe der vorliegenden Erfindung war es dabei auch, entsprechende Katalysatorsysteme zur Verfügung zu stellen, welche unempfindlicher gegenüber Verunreinigungen, insbesondere gegenüber Feuchtigkeit sind.

Die Lösung der Aufgabe erfolgt durch ein Katalysatorsystem, enthaltend

a) Aluminiumalkyl-Komplexe der allgemeinen Formel (I)

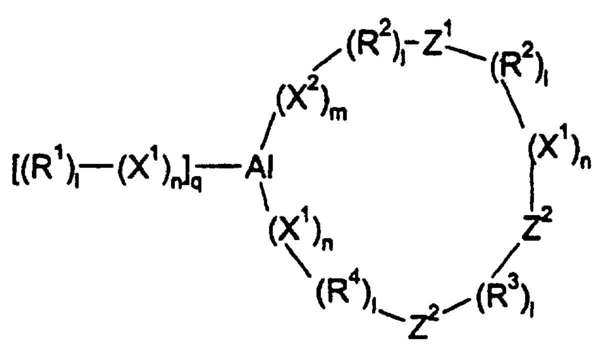

(I)

worin

| | |
|---|---|
| $X^1$ | NH, $NH_2$*, NH-A*, NH-$SiA_3$*, N-A, $NSiA_3$, $N(A)_2$*, $N(SiA_3)_2$*, O, $OSiA_2$, OA*, $OSiA_3$*, OAryl*, S, $SSiA_2$, SA*, $SSiA_3$*, PA, $PSiA_3$, $P(A)_2$*, $P(SiA_3)_2$*,oder Einfachbindung |
| $X^1$ | NH, N-A, $NSiA_3$, O, $OSiA_2$, S, $SSiA_2$, PA oder $X^1$ komplex gebunden an $Al(R^1)_3$, oder Einfachbindung |
| $R^1$ | H; Hal, wenn n = 0; A, gegebenenfalls kovalent gebunden an Al; $Si(A)_3$, wenn $X^1$ = O, |
| $R^2$ | A, gegebenenfalls kovalent gebunden an Al; |

$$CH_2\text{-}CH{=}CH,\ CH_2\text{-}C{\equiv}C \text{ für } Z^1 = H;$$

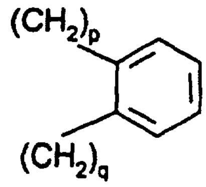,

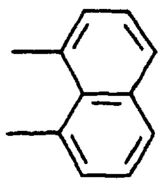, 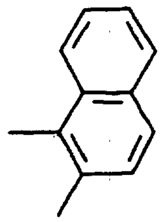, 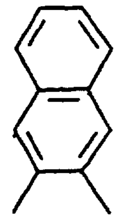;

| | |
|---|---|
| $R^3$ und $R^4$ | unabhängig voneinander Bindung oder gleich $R^2$ oder $Si(A)_3$ oder $Si(A)_2$ |
| $Z^1$ | Bindung oder jeweils H gebunden an $R^2$ |
| $Z^2$ | Bindung oder jeweils H gebunden an $R^2$ und $R^3$ |
| | mit |
| A | verzweigtes oder unverzweigtes $C_1$ - $C_7$-Alkyl, -Alkyliden oder -Alkenyliden |
| Aryl | Phenyl, Naphtyl, Indenyl, Fluorenyl |
| Hal | F, Cl, |
| | unabhängig voneinander |
| n | 0, 1, |
| m | 0, 1, |
| p | 0, 1, |
| q | 1, 2 |
| l | 0, 1 |

bedeuten, worin zwischen $X^1$, $X^2$ und Al koordinative Bindungen bestehen können, $R^1$, $R^2$, $R^3$, $R^4$, $X^1$, $X^2$, $Z^1$, und $Z^2$ jeweils unabhängig voneinander an unterschiedlichen Positionen im Molekül alle Bedeutungen annehmen können und X' nur die mit "*" gekennzeichneten Bedeutungen annehmen kann, wenn l = 0 und $R^1$, $R^2$, $R^3$ oder $R^4$ entfallen,

b) Magnesiumchlorid, $SiO_2$ oder $SiO_2$ in Kombination mit $MgCl_2$ als Trägermaterial,

c) einem Katalysator, ausgewählt aus der Gruppe der Titan- und Vanadiumhalogenide und

d) interne Donoren wie Mono- oder Di-Ester-Verbindungen wie Benzoesäureethylester, Phthalsäuredimethylester oder dem Fachmann geläufige interne Donoren und gegebenenfalls auch externe Donoren aus der Gruppe RSi $(OR)_3$ wie $PhSi(OEt)_3$ oder dem Fachmann geläufige externe Donoren.

Insbesondere erfolgt die Lösung der Aufgabe durch entsprechende Katalysatorsysteme, welche mindestens einen Aluminium-Alkyl-Komplex der allgemeinen Formel (I) ausgewählt aus der Gruppe

[3-(Dimethylamino)propyl]dimethylaluminium,
[3-(Dimethylamino)propyl]methylaluminiumchlorid,
[3-(Diethylamino)propyl]diethylaluminium,
[3-(Diethylamino)propyl]dipropylaluminium,[3-(Diethylamino)propyl]dibutylaluminium[4-(Diethylamino)butyl]dibutylaluminium[3-(Dimethylamino)propyl]aluminiumdichlorid,
[2-(Dimethylamino)benzyl]diethylaluminium,
[2-(Dimethylamino)benzyl]ethylaluminiumchlorid,[2,6-Bis(Dimethylaminomethyl)phenyl]diethylaluminium,
[8-(Dimethylamino)naphthyl]dimethylaluminium,
[8-(Dimethylamino)naphthyl]diethylaluminium,
1-[3-(Dimethylamino)propyl]-1-alumininacyclohexan,
1-[3-(Dimethylamino)-2-methylpropyl]-1-alumininacyclohexan,

1-[3-(Dimethylamino)propyl]-1-alumininacycloheptan,
Bis[3-(Dimethylamino)propyl]methylaluminium,
1,5-Dimethyl-1-alumina-5-azacyclooctan,
1-Ethyl-5-methyl-1-alumina-5-azacyclooctan,
1-Alumina-5-aza-bicyclo(3.3.3)-undecan,
[4-(Methoxy)butyl]dimethylaluminium,
[3-(Ethoxy)propyl]diethylaluminium,
[3-(Ethoxy)propyl]dibutylaluminium,
[3-(Propoxy)propyl]dibutylaluminium,
[4-(Ethoxy)butyl]dibutylaluminium,
[5-(Ethoxy)pentyl]dibutylaluminium,
[3-(Ethylthiopropyl)]diethylaluminium,
[3-(Ethylthiopropyl)]dibutylaluminium,
Bis{[2-(Dimethylamino)ethoxy)dimethylaluminium},
Bis{[2-(Dimethylamino)ethoxy]diethylaluminium},
Bis{[2-(Diethylamino)ethoxy]diethylaluminium},
Bis{[3-(Diethylamino)propoxy]diethylaluminium},
Bis{[2-(Dimethylamino)ethoxy]dibutylaluminium},
Bis{[2-(Methoxy)ethoxy]dimethylaluminium},
Bis{[3-(Methoxy)propoxy]dimethylaluminium},
Bis{[2-(Methoxy)ethoxy]diethylaluminium},
Bis{[2-(Methoxy)ethoxy]dibutylaluminium},
Bis{[2-(Butoxy)ethoxy]dimethylaluminium},
Bis{[2-(Butoxy)ethoxy]dibutylaluminium},
Bis{[2-(Ethoxy)ethoxy]diethylaluminium},
Bis{[2-(Phenoxy)ethoxy]dimethylaluminium},
Bis{[2-(Methoxy)phenoxy]dimethylaluminium},
[2-(Diethylamino)ethoxy]diethylaluminium-$AlEt_3$-Addukt,
[3-(Diethylamino)propoxy]diethylaluminium-$AlEt_3$-Addukt,
[2-(Methoxy)ethoxy]dimethylaluminium-$AlMe_3$-Addukt,
[2-(Methoxy)ethoxy]diethylaluminium-$AlEt_3$-Addukt,
[2-(Ethoxy)ethoxy]diethylaluminium-$AlEt_3$-Addukt,
[3-(Ethoxy)propoxy]diethylaluminium-$AlEt_3$-Addukt,
[2-(Methylthio)ethoxy]dimethylaluminium-$AlMe_3$-Addukt,

enthalten.

Gegenstand der vorliegenden Erfindung ist daher auch die Verwendung eines solchen Katalysatorsystems in heterogenen Polymerisationen von α-Olefinen, prochiralen Olefinen, insbesondere von Ethylen und Propylen.

In diesen Reaktionen ist das erfindungsgemäße Katalysatorsystem als Stereoselektivitätsvermittler einsetzbar. Die Polymereigenschaften sind durch gezielte Auswahl des Katalysators steuerbar.

Gegenstand der vorliegenden Erfindung ist weiterhin ein Verfahren zur Herstellung erfindungsgemäßer Katalysatorsysteme zur Polymerisation von α-Olefinen oder prochiralen Olefinen. Je nach Einsatzzweck kann die Herstellung erfolgen, indem

(a) eine Trägerung eines Titan- oder Vanadiumhalogenides auf $MgCl_2$ oder $SiO_2$ oder auf einer Kombination aus $SiO_2$ und $MgCl_2$ unter Zugabe eines internen Donors wie Mono- oder Di-Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren und einer Aluminium-Verbindung der allgemeinen Formel (I) gemäß Anspruch (I),
oder durch
(b) Trägerung einer Aluminium-Verbindung der allgemeinen Formel (I) gemäß Anspruch (I) auf $MgCl_2$, $SiO_2$ oder $SiO_2$ in Kombination mit $MgCl_2$und Zugabe eines Titan- oder Vanadiumhalogenides und Zugabe eines internen Donors wie Mono- oder Di-Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren
oder durch
(c) Trägerung einer aus einer Aluminium-Verbindung der allgemeinen Formel (I) und einem Titan- oder Vanadiumhalogenid generierten aktiven Spezies auf $MgCl_2$ oder $SiO_2$ oder auf einer Kombination aus $SiO_2$ und $MgCl_2$

unter Zugabe eines internen Donors wie Mono - oder Di-Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren durchgeführt wird.

Überraschenderweise wurde gefunden, daß durch die Trägerung der Aluminium-Verbindungen der allgemeinen Formel (I) auf Magnesiumchlorid oder $SiO_2$ oder auf einer Kombination aus $SiO_2$ und $MgCl_2$ in Gegenwart von Titan- oder Vanadiumhalogeniden und interne Donoren wie Mono- oder Di-Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren, ein Katalysatorsystem entsteht, welches zum einen die Polymerisation von α-Olefinen, insbesondere Propylen, in hohen Ausbeuten ermöglicht und zum anderen in der Ethylen-Polymerisation zu einer enormen Aktivitätssteigerung bereits bei 30°C im Vergleich zu den Träger-freien Katalysatorsystemen führt. Dabei wurde die Trägerung einer bereits aus beiden Komponenten generierten aktiven Spezies auf $MgCl_2$ oder $SiO_2$ oder auf einer Kombination aus $SiO_2$ und $MgCl_2$ unter Zugabe eines internen Donors wie Monooder Di-Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren entwickelt.

Es wurde gefunden, daß sich die Polymereigenschaften durch die Wahl des Cokatalysators steuern lassen.

Vorteilhafterweise lassen sich die erfindungsgemäßen Katalysatorsysteme unter Prozeß-erleichternden Bedingungen einsetzen. Letzteres ist insbesondere der Fall bei Verwendung eines niedrigeren Cokatalysator-Katalysator-Verhältnisses als bisher üblich. Insbesondere durch Veränderung dieses Verhältnisses sind erfindungsgemäß die Polymerisationseigenschaften zu steuern.

Als weitere vorteilhafte Eigenschaft wurde gefunden, daß die neuen Katalysatorsysteme gegenüber Luft, Feuchtigkeit und Verunreinigungen im Reaktionssystem recht stabil sind und somit technisch weniger aufwendige Behälter zur Lagerung und zum Transport bzw. technisch weniger aufwendige Anlagen zur Katalysator-Herstellung und zur Olefinpolymerisation erfordern. Auch weisen die neuen Katalysatorsysteme unter Reaktionsbedingungen eine hohe thermische Stabilität und Lebensdauer auf.

Weiterhin wurde überraschenderweise gefunden, daß die neuen Katalysatorsysteme, bestehend aus $MgCl_2$ oder $SiO_2$ oder einer Kombination aus $SiO_2$ und $MgCl_2$, einer Titan- oder Vanadium halogenid-Verbindung, eines internen Donors und einer Aluminium-Verbindung der allgemeinen Formel (I), während der Polymerisation von prochiralen Olefinen ohne Zugabe von externen Donoren auch stereoselektiv wirken.

Damit können die Aluminium-Verbindungen der allgemeinen Formel (I) in den neuen Katalysatorsystemen gleichzeitig mehrere Funktionen übernehmen:

Zum einen wirken sie als Cokatalysatoren und zum anderen wirken sie als Stereoselektivitäts-Vermittler. Damit wird es möglich, die Anzahl der notwendigen Katalysatorkomponenten um eine Komponente zu reduzieren. Die dritte Funktion besteht in der Steuerung der molekularen Struktur der Polymere wie Molekulargewichte, Molekulargewichtsverteilungen, Taktizitäten und Verzweigungen und damitder Polymereigenschaften wie Härte, Steifigkeit, Zähigkeit, Verschweißbarkeit, Transparenz, Gasdurchlässigkeit und Verarbeitbarkeit.

Eine Reduzierung der Anzahl der Katalysator-Komponenten trägt neben der gefundenen höheren thermischen Stabilität und geringeren Sauerstoff- und Feuchtigkeitsempfindlichkeit noch zusätzlich zur allgemeinen Prozesserleichterung bei der Katalysatorherstellung und Olefinpolymerisation bei.

Die geringe Sauerstoff- und Feuchtigkeitsempfindlichkeit der Aluminium-Verbindungen der allgemeinen Formel (I), die eine bequemere und sicherere Handhabung ermöglichen, wird durch die intramolekular-stabilisierende Donorgruppe unter koordinativer Stabilisierung des Aluminium-Zentrums erreicht.

Wie beschrieben, bestehen die neuen Katalysatorsysteme aus Träger, Katalysator, Donor und Cokatalysator: Als Cokatalysatoren dienen die Aluminium-Verbindungen der allgemeinen Formel (I).

Als Katalysatoren dienen Übergangsmetallverbindungen der IV. bis VIII. Nebengruppe des Periodensystems der Elemente, insbesondere Übergangsmetallverbindungen aus der IV. und V. Nebengruppe des Periodensystems, insbesondere Titan- und Vanadiumhalogenid-Verbindungen. Geeignete Verbindungen sind beispielsweise $TiCl_4$ und $VCl_4$.

Als Katalysatorträger kann wasserfreies $MgCl_2$ dienen oder $SiO_2$ oder eine Kombination aus $SiO_2$ und $MgCl_2$.

Als Donor dienen interne Donoren wie Mono- oder Di-Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren.

Die Herstellung der erfindungsgemäßen geträgerten Katalysatorsysteme erfolgt nach einem Verfahren, welches anhand von im folgenden Text gegebenen Beispielen offenbart ist. Bei diesen Beispielen handelt es sich um spezielle Ausführungsformen. Dem Fachmann ist es durch sein Fachwissen möglich, die darin gegebenen Mittel durch

entsprechende gleichwirkende Mittel zu ersetzen.

Zur Herstellung der geträgerten Katalysatorsystemen können als Lösemittel aprotische, unpolare Solventien wie Pentan, Hexan, Heptan, Octan, Benzol oder Toluol dienen.

Es hat sich gezeigt, daß wirkungsvolle Systeme erhalten werden, wenn das Cokatalysator/Katalysator-Verhältnis zwischen 1:1 und 80:1, vorzugsweise zwischen 5:1 und 20:1 liegt.

Es wurde gefunden, daß in den neuen Katalysatorsystemen das Cokatalysator-Katalysator-Verhältnis verringert werden kann, ohne zu Aktivitätsverlusten zu führen. Zudem führt die Verwendung der neuartigen Cokatalysatoren in der Ethylen- und Propylen-Polymerisation zu einer Aktivitätssteigerung im Vergleich zu den herkömmlichen Katalysatorsystemen. Auf diese Weise können die erfindungsgemäßen Katalysatorsysteme wesentlich kostengünstiger hergestellt werden als entsprechende, bisher bekannte Systeme. Es ist möglich, das Cokatalysator-Katalysator-Verhältnis auf Werte zwischen 20 : 1 und 1 : 1 zu senken, ohne die Ausbeuten und die angestrebte Produktqualität in wesentlichem Maße zu beeinflussen. Bis zu einem Verhältnis von ca. 2 : 1 müssen dabei keine Aktivitätsverluste in Kauf genommen werden. Aber auch noch bei einem Verhältnis von 1 : 1 werden hohe Aktivitäten erzielt, die weit über denen mit herkömmlichen Systemen liegen.

Die Katalysator-Konzentration liegt zwischen $10^{-2}$ und $10^{-6}$ mol/l, vorzugsweise zwischen $10^{-3}$ und $10^{-5}$ mol/l.

Die Katalysator- bzw. Cokatalysator-Beladung auf $MgCl_2$ liegt zwischen 0.5 und 5 mmol/g, vorzugsweise zwischen 1 und 3 mmol/g.

Die neuen Katalysatorsysteme ermöglichen durch ihre geringere Feuchtigkeits- und Luftempfindlichkeit und durch ihre geringere Empfindlichkeit gegenüber Verunreinigungen während ihres Einsatzes in einer Polymerisation eine sicherere Handhabung und bessere Reproduzierbarkeit der Ergebnisse aber auch eine höhere Langzeitstabilität im Vergleich zu den Systemen des Stands der Technik.

Zum besseren Verständnis und zur Verdeutlichung der Erfindung werden im folgenden Beispiele gegeben, die im Rahmen des Schutzbereichs der vorliegenden Erfindung liegen. Diese sind jedoch aufgrund der allgemeinen Gültigkeit des beschriebenen Erfindungsprinzips nicht geeignet, den Schutzbereich der vorliegenden Anmeldung nur auf diese Beispiele zu reduzieren. Weiterhin ist der Inhalt der zitierten Patentanmeldung DE 197 53 135 als Teil der Offenbarung der Erfindung der vorliegenden Beschreibung anzusehen.

**Beispiele:**

a) Herstellung der neuen Katalysatorsysteme:

**Trägerung der Aluminiumalkylkomplexe der allgemeinen Formel (I) auf $MgCl_2$**

Ansatz:

$$\text{Aluminiumorganyl: } n_{Al\text{-}Cokat}[mol] = m_{Al\text{-}Cokat} / M_{Al\text{-}Cokat}$$

$$MgCl_2\text{:} \quad m_{MgCl2} = n_{Al\text{-}Cokat} / \text{theor. Beladung } [mol(Al)/g] - m_{Al\text{-}Cokat}$$

$$\text{Kohlenwasserstoff: für 3-8 g Gesamtmenge } (m_{MgCl2} + m_{Al\text{-}Cokat}) \text{ 50 ml}$$

Durchführung:

Alle Arbeiten werden unter Schutzgas ausgeführt. Der verwendete Kohlenwasserstoff wird vor der Reaktion getrocknet und destilliert. In einem ausgeheizten Kolben mit Schlenkansatz werden das Aluminiumorganyl und das Magnesiumchlorid vorgelegt. Die entsprechenden Mengen werden aus der gewünschten theoretischen Beladung berechnet, die im Bereich von 1-2*$10^{-3}$ mol(Al)/g liegen sollte. Je nach Löslichkeit des Aluminiumorganyls wird Pentan, Hexan, Heptan, Octan, Benzol oder Toluol hinzugegeben. Danach wird die Reaktionsmischung 12 Stunden bei Raumtemperatur gerührt. Anschließend wird das Lösungsmittel im Vakuum bei 60-120 mbar entfernt.

Die theoretische Beladung wird nach folgender Gleichung berechnet:

$$(m_{Al\text{-}Cokat}/M_{Al\text{-}Cokat}) / (m_{Al\text{-}Cokat}+m_{MgCl2}) = \text{theor. Beladung } [mol(Al)/g]$$

| Geträgerte Komponente | Beladung [mmol/g] | Geträgerte Komponente | Beladung [mmol/g] |
|---|---|---|---|
| 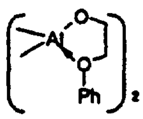 | 1.8 | 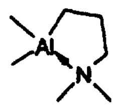 | 1.5 |
| 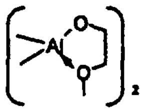 | 1.3 | 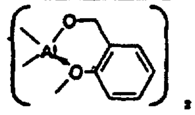 | 1.5 |

| | | | |
|---|---|---|---|
| 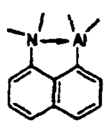 | 1.0 | 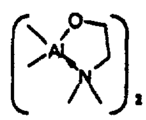 | 1.5 |
| 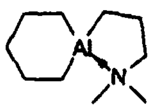 | 1.0 | 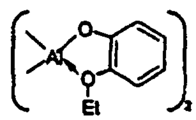 | 1.5 |

**Trägerung von (3-Dimethylaminopropyl)dimethylaluminium auf $MgCl_2$**

Ansatz:

Al-Cocat: 1.77 g ($1.2*10^{-2}$mol) $M_{Al-Cocat}$ = 143.21 g/mol

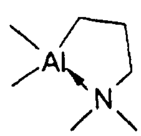

$MgCl_2$: 6.50 g ($6,8*10^{-2}$ mol) $M_{MgCl2}$ = 95.21 g/mol
Pentan: 50 ml

Durchführung:

Alle Arbeiten wurden unter Schutzgas ausgeführt. Pentan wurde vor der Reaktion getrocknet und destilliert. In einem ausgeheizten 100 ml-Kolben mit Schlenkansatz wurden das Aluminiumorganyl und das Magnesiumchlorid vorgelegt. Nach Zugabe von 50 ml Pentan wurde die Reaktionsmischung 12 Stunden bei Raumtemperatur gerührt. Anschließend wurde das Lösungsmittel 2 Stunden im Vakuum bei 100-120 mbar entfernt. Man erhielt ein hellgraues Pulver.

Die theoretische Beladung wurde nach folgender Gleichung berechnet:

$$(m_{AlN1}/M_{Al\text{-}Cocat})\,(m_{Al\text{-}Cocat}+m_{MgCl2}) = 1.5*10^{-3}\ \text{mol/g}$$

**Trägerung von $TiCl_4$ auf $MgCl_2$**

Reaktionsbedingungen und Durchführung:

$MgCl_2$ in 50 ml Pentan suspendieren, $TiCl_4$ zugeben, 12 Stunden bei 25°C unter Inertgasatmosphäre rühren, Pentan bei 80 mbar entfernen. Beladung : 1.4 mmol/g.

*b) Anwendung der neuen Katalysatorsysteme in der Olefinpolymerisation:*

Die Polymerisation wird in bekannter Weise in Lösungs-, Suspensionsoder Gasphasenpolymerisation kontinuierlich oder diskontinuierlich durchgeführt bei einer Temperatur von 0 °C bis +200 °C, vorzugsweise zwischen +20 und +140 °C und einem Druck von 1 bis 20 bar, vorzugsweise von 2 bis 10 bar. Als Lösemittel dienen Hexan, Heptan, Octan, Propen oder Toluol.

Polymerisiert werden Olefine der Formel $R^a$-CH=CH-$R^b$, worin $R^a$ und $R^b$ gleich oder verschieden sind und Wasserstoff oder ein Alkylrest von 1 bis 20 C-Atomen bedeuten, vorzugsweise Ethylen, $H_2C=CH_2$, und Propylen, $MeHC=CH_2$.

Die neuen Katalysatorsysteme ermöglichen die Herstellung von Homo-, Co- und Blockpolymere, vorzugsweise die Homopolymere Polyethylen und Polypropylen.

Die Aktivitäten der Katalysatorsysteme sind in der Ethylen- und Propylenpolymerisation mit denen von $MgCl_2$, $TiCl_4$ und $AlEt_3$ vergleichbar und besser, jedoch unter Verwendung eines deutlich geringeren Cokatalysator-Katalysator-Verhältnisses.

Mit allen neuen Katalysatorsystemen wurden hochmolekulare und feinkömige Polymere erhalten.

Die Molekulargewichte der Polyethylenproben liegen zwischen $2\cdot10^6$ - $8\cdot10^6$ g/mol. Die Schmelzpunkte variieren zwischen 135°C und 140°C. Die Kristallinitäten liegen zwischen 40 und 80 %. Die Polymerproben sind unverzweigt und linear.

Die Polypropylenproben haben Molekulargewichte von $4\cdot10^5$ -$1\cdot10^6$ g/mol, eine deutlich im Vergleich zu $AlEt_3$ niedrigere Molekulargewichtsverteilung von 7 - 15. Die Schmelzpunkte variieren zwischen 150 °C und 160 °C. Die Kristallinitäten liegen zwischen 30 und 60%.

Die Katalysatorsysteme wirken ohne Zugabe von Donoren stereoselektiv in der Propylenpolymerisation. $^{13}C$-NMR-Analysen der Polypropylenproben zeigen lineare Strukturen mit isotaktischen Sequenzlängen mit einer deutlich höheren Häufigkeiten der mmmm-Pentaden im Vergleich zum $AlEt_3$.

**Polymerisation von Ethylen und Propylen**

Alle Polymerisationen wurden unter einer Argon-Inertgasatmosphäre unter Einsatz von Schlenk-Techniken durchgeführt. Feste Katalysator- und Cokatalysatorkomponenten wurden in einer BRAUN labmaster 130 Glovebox unter Benutzung einer Analysenwaage eingewogen. Für ein Standardexperiment wurde soviel Substanz in einen 25 ml Glaskolben gegeben, daß ca. 0.5 $10^{-3}$ mol geträgerte Aluminiumatome zur Polymerisation eingesetzt werden konnten. Das als Katalysator verwendete Titantetrachlorid wurde in Form einer toluolischen 0.1 mol/l Stammlösung angesetzt. Für Versuche mit geträgertem Titantetrachlorid wurde eine 0.1 mol/l Suspension des geträgerten Katalysators hergestellt. Der ungeträgerte Cokatalysator wurde in einem 25 ml Glaskolben eingewogen, so daß etwa 0.5 $10^{-3}$ mol Aluminiumatome zur Polymerisation eingesetzt werden konnten.

Die Polymerisationen wurden im einem 1 l Glasautoklaven der Firma Büchi durchgeführt. Vor jedem Versuch wurde der Reaktor mit Ethanol und Toluol, Hexan oder Heptan gereinigt, bei 95 °C über eine Stunde im Ölpumpenvakuum evakuiert und zwischendurch mehrfach mit Argon gespült. Der Autoklav wurde nacheinander mit 195 ml Toluol, Hexan oder Heptan und mit dem in 4 ml Toluol, Hexan oder Heptan suspendierten geträgerten Cokatalysator befüllt. Es wurde eine Temperatur von 30, 45 oder 60 °C eingestellt. Das Monomer wurde mit einem Druck von 2 oder 10 bar aufgepreßt. Nach dem Sättigen der im Reaktor befindlichen Suspension mit dem Monomer wurden die Polymerisationen durch Injektion von 1 ml einer 0.1 mol/l Lösung von Titantetrachlorid gestartet. Bei Experimenten mit ungeträgerten Aluminiumalkylen und geträgertem Titantetrachlorid erfolgte zunächst die Zugabe der Katalysatorsuspension; die Polymerisationen wurden dann durch Injektion einer Toluol-, Hexan- oder Heptan-Lösung des Cokatalysators gestartet. Die isobare Reaktionsführung wurde durch die Monomerversorgung des Reaktors, bestehend aus einem BROOKS pressure regulator PC8606 und einem BROOKS mass flow controller 5850TR, gewährleistet. Der Monomerverbrauch wurde mittels eines BROOKS Steuer- und Anzeigegerätes Modell 5876 und eines daran angeschlossenen, mit einer A/D-Wandlerkarte ausgestatteten, Personal Computers mit Hilfe der Software RTX View aufgezeichnet.

Die Polymerisationen wurden durch Injektion von 5 ml Ethanol beendet. Die Polymerisationssuspension wurde mit verdünnter Salzsäure versetzt und über Nacht gerührt. Die organische Phase wurde mit einer gesättigten Natriumhydrogencarbonat-Lösung neutralisiert und mit Wasser gewaschen. Das Toluol wurde bis zur Massenkonstanz des Polymers im Ölpumpenvakuum entfernt.

**Polymeranalytik**

Die Thermogramme wurden mit einem Mettler-Toledo Differentialcalorimeter 821e mit einer Heizrate von 20 °C/min aufgenommen. Die im 2nd Heat erhaltenen Werte wurden als Schmelzpunkte angegeben.

Die Viskositätsmittel der Molmassen $M_\eta$ wurden mit Hilfe eines Ubbelohde Viskosimeters ermittelt. Durch Lösen von ca. 50 mg des Polymers in 50 ml Decahydronaphthalin wurden die Proben hergestellt. Die Durchlaufzeiten wurden mittels eines Viskoboys der Firma LAUDA gemessen. Die Mark-Houwink-Konstanten wurden aus *T. G. Scholte, N. L. J. Meijerink, H. M. Schoeffeleers, A. M. G. Brands, J. Appl. Polym. Sci.* **29** *(1984)* 3763 entnommen.

Für die Aufnahme der $^{13}C$-NMR-Spektren wurde ein BRUKER-MSL 300-Gerät verwendet. Bei einer Messung wurden üblicherweise 1000 Scans bei einer Meßfrequenz von 75.47 MHz und einer Temperatur von 100 °C aufgenommen. Der Pulswinkel betrug dabei 60 ° und das Relaxationsdelay 6 s. Durch Ansetzen einer Lösung von 10 Massenprozent Polymer in einer Mischung aus Perchlorbutadien und 1,1,2,2-Tetrachlordideuteroethan wurden die NMR-Proben hergestellt.

**Polymerisation von Ethylen mit auf $MgCl_2$ geträgerten Aluminiumalkyl-Verbindungen und $TiCl_4$.**

Polymerisationsbedingungen: $T_p$ = 30 °C, $p_{Monomer}$ = 2 bar,
$C_{Ti} = 10^{-5}$ mol/l, Al/Ti = 5

| Cokatalysator | Aktivität $[kg_{PE}/(mol_{Ti}\ c_{Ethen}\ h)]$ | $T_m$ [°C] | Kristallinität [%] | $\eta$ [ml/g] | $M_\eta \cdot 10^6$ [g/mol] |
|---|---|---|---|---|---|
| 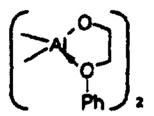 | 90 | 136.8 | 39.7 | n.b. | n.b. |
| 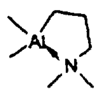 | 100 | 135.5 | 59.3 | 2050 | 3.10 |
| 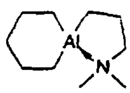 | 480 | 131.2 | 54.0 | 1795 | 5.11 |
| 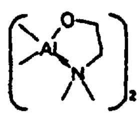 | 27 | n.b. | n.b. | n.b. | n.b. |
| 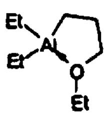 | 700 | 132.5 | 53.3 | n.b. | n.b. |
| 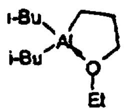 | 8 | 132.9 | 38.0 | n.b. | n.b. |
| 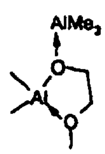 | 320 | 132.3 | 53.5 | n.b. | n.b. |
| Vergleich $AlEt_3$ | 670 | 138.9 | 51.0 | 2254 | 3.53 |

n.b. = nicht bestimmt

**Polymerisation von Propylen mit auf $MgCl_2$ geträgerten Aluminiumalkyl-Verbindungen und $TiCl_4$.**

Polymerisationsbedingungen: $T_p$ = 30 °C, $p_{Monomer}$ = 2 bar, $c_{Ti}$ = $10^{-5}$ mol/l, Al/Ti = 5

| Cokatalysator | Aktivität [$kg_{PP}$/ ($mol_{Ti}$ $c_{Propen}$ h)] | $T_m$ [°C] | Kristallinität [%] | η [ml/g] | $M_\eta \cdot 10^6$ [g/mol] |
|---|---|---|---|---|---|
| 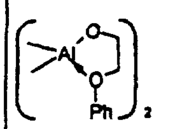 | 2 | 151.6 | 10.4 | n.b. | n.b. |
| 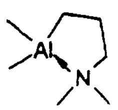 | 8 | 152.8 | 23.8 | 333 | 0.704 |
| 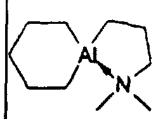 | 3 | 145.8 | 15.2 | 393 | 0.886 |
| 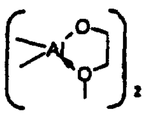 | 12 | n.b. | n.b. | n.b. | n.b. |
| 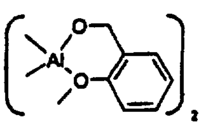 | 8 | n.b. | n.b. | n.b. | n.b. |
| $AlEt_3$ | 62 | 152.2 | 11.5 | 217 | 0.388 |

n.b. = nicht bestimmt

Die Mikrostruktur der Polypropene, erhalten mit $MgCl_2$/Aluminiumalkyl-Verbindungen und $TiCl_4$:

| | | | Pentade | | | | | | | | |
|---|---|---|---|---|---|---|---|---|---|---|---|
| | $n_{iso}$ | Rel. Int. [%] | Mmmm | Mmmr | Rmmr | mmrr | mrr + mrmm | mrmr | rrr | rrm | Mrrm |
| 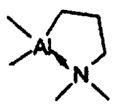 | 10 | Rel. Int. [%] | 57.9 | 9.1 | 1.4 | 0.0 | 9.7 | 6.0 | 2.7 | 8.0 | 5.3 |
| 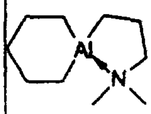 | 5 | Rel. Int. [%] | 38.3 | 8.9 | 2.6 | 0.0 | 13.6 | 9.1 | 2.4 | 13.3 | 11.8 |
| Vergleich $AlEt_3$ | 7 | Rel. Int. [%] | 46.5 | 10.9 | 2.9 | 0.0 | 12.8 | 8.7 | 2.9 | 8.7 | 6.5 |

**Polymerisation von Ethylen mit $MgCl_2/TiCl_4$ und Aluminiumalkyl-Verbindungen.**

Polymerisationsbedingungen: $T_p$ = 30 °C, $p_{Monomer}$ = 2 bar, $c_{Ti}$ = $10^{-5}$ mol/l, Al/Ti = 5

| Cokatalysator | Aktivität[$kg_{PE}/(mol_{Ti}$ $c_{Ethen}$ h)] | $T_m$ [°C] | Kristallinität [%] | η [ml/g] | $M_\eta * 10^6$ [g/mol] |
|---|---|---|---|---|---|
| 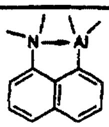 | 309 | 137.7 | 50.4 | 2020 | 3.03 |
| 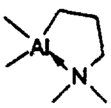 | 480 | 136.4 | 46.9 | 2120 | 3.24 |
| 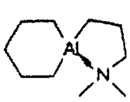 | 315 | 135.1 | 42.3 | 2210 | 3.43 |
| 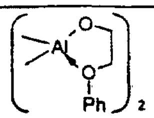 | 105 | 137.4 | 42.6 | n.b. | n.b. |
| 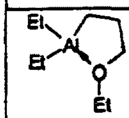 | 700 | n.b. | n.b. | n.b. | n.b. |
| 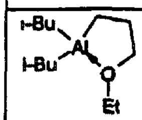 | 15 | n.b. | n.b. | n.b. | n.b. |
| 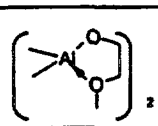 | 23 | n.b. | n.b. | n.b. | n.b. |
| 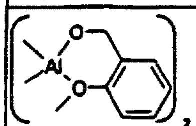 | 30 | n.b. | n.b. | n.b. | n.b. |
| 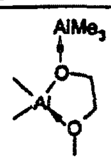 | 1100 | n.b. | n.b. | n.b. | n.b. |
| Vergleich $AlEt_3$ | 600 | 139.1 | 53.0 | 1801 | 2.59 |

**Polymerisation von Propylen mit $MgCl_2/TiCl_4$ und Aluminiumalkyl-Verbindungen.**

Polymerisationsbedingungen: $T_p$ = 30 °C, $p_{Monomer}$ = 2 bar, $c_{Ti} = 10^{-5}$ mol/l, Al/Ti = 5

| Cokatalysator | Aktivität [$kg_{PP}$/ ($mol_{Ti}$ $c_{Propen}$ h)] | $T_m$ [°C] | η [ml/g] | $M_η \cdot 10^6$ [g/mol] |
|---|---|---|---|---|
| 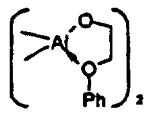 | 17 | 150.9 | 11.1 | n.b. |
| 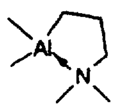 | 145 | 154.4 | 309 | 0.634 |
| 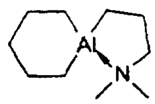 | 95 | 148.5 | 346 | 0.740 |
| 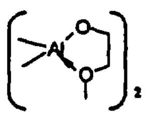 | 2 | n.b. | n.b. | n.b. |
| 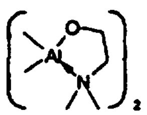 | 2 | n.b. | n.b. | n.b. |
| Vergleich $AlEt_3$ | 155 | 151.0 | 186 | 0.312 |

n.b. = nicht bestimmt

Die Molekulargewichte und Molekulargewichtsverteilungen der Polypropene, erhalten mit $MgCl_2$/$TiCl_4$ und Aluminiumalkyl-Verbindungen:

| Cokatalysator | $M_n$ [g/mol] | $M_w$ [g/mol] | $M_w/M_n$ |
|---|---|---|---|
| 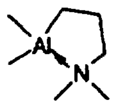 | 55000 | 738000 | 13.4 |
| 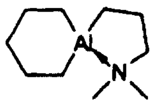 | 60400 | 962000 | 15.9 |
| Vergleich $AlEt_3$ | 15500 | 441000 | 28.4 |

Die Mikrostruktur der Polypropene, erhalten mit $MgCl_2$/ $TiCl_4$ und Aluminiumalkyl- Verbindungen:

| | | | Pentade | | | | | | | | |
|---|---|---|---|---|---|---|---|---|---|---|---|
| | $n_{iso}$ | Rel. Int. [%] | Mmmm | Mmmr | rmmr | mmrr | mrr + mrmm | mrmr | rrr | rrm | mrrm |
| 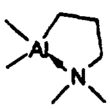 | 8 | Rel. Int. [%] | 54.3 | 11.7 | 4.7 | 11.3 | 6.4 | 2.9 | 2.5 | 3.8 | 2.4 |
| 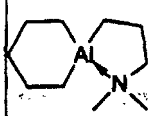 | 5 | Rel. Int. [%] | 36.9 | 10.2 | 2.5 | 13.8 | 8.8 | 1.8 | 14.3 | 7.0 | 4.8 |
| Vergleich $AlEt_3$ | 7 | Rel. Int. [%] | 51.0 | 8.1 | 2.0 | 10.3 | 6.9 | 1.7 | 11.5 | 5.0 | 3.4 |

**Patentansprüche**

**1.** Katalysatorsysteme, enthaltend

a) an ein Trägermaterial, ausgewählt aus der Gruppe Magnesiumchlorid, $SiO_2$ und $SiO_2$ in Kombination mit $MgCl_2$, gebundene Aluminiumalkyl-Komplexe als Cokatalysatoren der allgemeinen Formel (I)

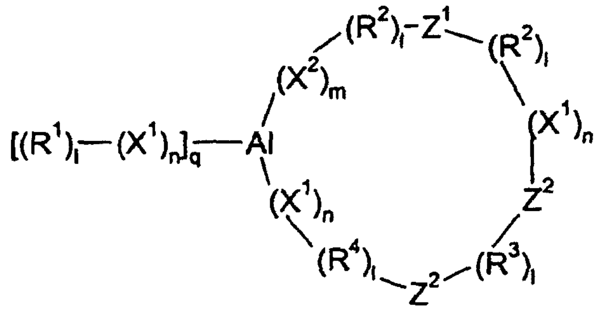

(I)

worin

X¹ — NH, $NH_2$*, NH-A*, NH-$SiA_3$*, N-A, $NSiA_3$, $N(A)_2$*, $N(SiA_3)_2$*, O, $OSiA_2$, OA*, $OSiA_3$*, OAryl*, S, $SSiA_2$, SA*, $SSiA_3$*, PA, $PSiA_3$, $P(A)_2$*, $P(SiA_3)_2$*, oder Einfachbindung

$X^2$ — NH, N-A, $NSiA_3$, O, $OSiA_2$, S, $SSiA_2$, PA oder $X^1$ komplex gebunden an $Al(R^1)_3$, oder Einfachbindung

$R^1$ — H; Hal, wenn n = 0; A, gegebenenfalls kovalent gebunden an Al; $Si(A)_3$, wenn $X^1$ = O,

$R^2$ — A, gegebenenfalls kovalent gebunden an Al;

$CH_2$-CH=CH, $CH_2$-C≡C für $Z^1$ = H;

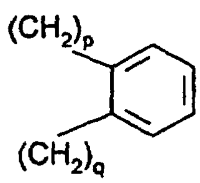

,

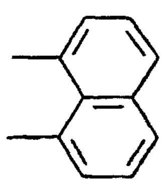

,

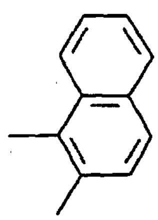

,

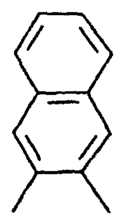

;

$R^3$ und $R^4$ — unabhängig voneinander Bindung oder gleich $R^2$ oder $Si(A)_3$ oder $Si(A)_2$

$Z^1$ — Bindung oder jeweils H gebunden an $R^2$

$Z^2$ — Bindung oder jeweils H gebunden an $R^2$ und $R^3$ mit

A — verzweigtes oder unverzweigtes $C_1$ - $C_7$-Alkyl, -Alkyliden oder -Alkenyliden

Aryl — Phenyl, Naphtyl, Indenyl, Fluorenyl

Hal F, Cl, unabhängig voneinander

n 0,1,

m 0,1,

p 0,1,

q 1,2

l 0,1

bedeuten, worin zwischen $X^1$, $X^2$ und Al koordinative Bindungen bestehen können, $R^1$, $R^2$, $R^3$, $R^4$, $X^1$, $X^2$, $Z^1$, und $Z^2$ jeweils unabhängig voneinander an unterschiedlichen Positionen im Molekül alle Bedeutungen annehmen können und $X^1$ nur die mit "*" **gekennzeichneten** Bedeutungen annehmen kann, wenn l = 0 und $R^1$, $R^2$, $R^3$ oder $R^4$ entfallen,

b) einen an ein Trägermaterial, ausgewählt aus der Gruppe Magnesiumchlorid, $SiO_2$ und $SiO_2$ in Kombination mit $MgCl_2$, gebundenen Katalysator, ausgewählt aus der Gruppe der Titan- und Vanadiumhalogenide und

c) interne und gegebenenfalls auch externe Donoren aus der Gruppe der Mono- oder Diester-Verbindungen bzw. aus der Gruppe $RSi(OR)_3$ und $R_2Si(OR)_2$, worin die Reste R unabhängig voneinander ein verzweigtes oder unverzweigtes $C_1$-$C_{10}$-Alkyl bedeuten.

**2.** Verwendung eines Katalysatorsystems gemäß Anspruch 1 in heterogenen Polymerisationen von $\alpha$-Olefinen.

**3.** Verwendung eines Katalysatorsystems gemäß Anspruch 1 in heterogenen Polymerisationsreaktionen von Ethylen und Propylen.

**4.** Verwendung eines Katalysatorsystems gemäß Anspruch 1 in Polymerisationsreaktionen von prochiralen Olefinen.

**5.** Verwendung eines Katalysatorsystems gemäß Anspruch 1 als Stereoselektivitätsvermittler in Polymerisationsreaktionen von Olefinen.

**6.** Verfahren zur Herstellung eines Katalysatorsystems zur Polymerisation von $\alpha$-Olefinen oder prochiralen Olefinen, durch Trägerung einer aus einer Aluminium-Verbindung der allgemeinen Formel (I) und einem Titan- oder Vanadiumhalogenid generierten aktiven Spezies auf $MgCl_2$, $SiO_2$ oder $SiO_2$ in Kombination mit $MgCl_2$ unter Zugabe eines internen oder externen Donors aus der Gruppe der Mono- oder Diester-Verbindungen bzw. aus der Gruppe $RSi(OR)_3$ und $R_2Si(OR)_2$, worin die Reste R unabhängig voneinander ein verzweigtes oder unverzweigtes $C_1$ - $C_{10}$-Alkyl bedeutet.

**7.** Katalysatorsystem gemäß Anspruch 1, enthaltend mindestens einen Aluminium-Alkyl-Komplex der allgemeinen Formel (I) ausgewählt aus der Gruppe

[3-(Dimethylamino)propyl]dimethylaluminium,
[3-(Dimethylamino)propyl]methylaluminiumchlorid,
[3-(Diethylamino)propyl]diethylaluminium,
[3-(Diethylamino)propyl]dipropylaluminium,[3-(Diethylamino)propyl]dibutylaluminium[4-(Diethylamino)butyl] dibutylaluminium[3-(Dimethylamino)propyl]aluminiumdichlorid,
[2-(Dimethylamino)benzyl]diethylaluminium,
[2-(Dimethylamino)benzyl]ethylaluminiumchlorid,[2,6-Bis(Dimethylaminomethyl)phenyl]diethylaluminium,
[8-(Dimethylamino)naphthyl]dimethylaluminium,
[8-(Dimethylamino)naphthyl]diethylaluminium,
1-[3-(Dimethylamino)propyl]-1-aluminacyclohexan,
1-[3-(Dimethylamino)-2-methylpropyl]-1-alumininacyclohexan,
1-[3-(Dimethylamino)propyl]-1-alumininacycloheptan,
Bis[3-(Dimethylamino)propyl]methylaluminium,

1,5-Dimethyl-1-alumina-5-azacyclooctan,
1-Ethyl-5-methyl-1-alumina-5-azacyclooctan,
1-Alumina-5-aza-bicyclo(3.3.3)-undecan,
[4-(Methoxy)butyl]dimethylaluminium,
[3-(Ethoxy)propyl]dibutylaluminium,
[3-(Ethoxy)propyl]dibutylaluminium,
[3-(Propoxy)propyl]dibutylaluminium,
[4-(Ethoxy)butyl]dibutylalummium,
[5-(Ethoxy)pentyl]dibutylaluminium,
[3-(Ethylthiopropyl)]diethylaluminium,
[3-(Ethylthiopropyl)]dibutylaluminium,
Bis{[2-(Dimethylamino)ethoxy]dimethylaluminium},
Bis{[2-(Dimethylamino)ethoxy]diethylaluminium},
Bis{[3-(Diethylamino)ethoxy]diethylaluminium},
Bis{[3-(Diethylamino)propoxy]diethylaluminium},
Bis{[2-(Dimethylamino)ethoxy]dibutylaluminium},
Bis{[2-{Methoxy)ethoxy]dimethylaluminium},
Bis{[3-(Methoxy)propoxy]dimethylaluminium},
Bis{[2-(Methoxy)ethoxy]diethylaluminium},
Bis{[2-(Methoxy)ethoxy]dibutylaluminium},
Bis{[2-(Butoxy)ethoxy]dimethylaluminium},
Bis{[2-(Butoxy)ethoxy]dibutylaluminium},
Bis{[2-(Ethoxy)ethoxy]diethylaluminium},
Bis{[2-(Phenoxy)ethoxy]dimethylaluminium},
Bis{[2-(Methoxy)phenoxy]dimethylaluminium},
[2-(Diethylamino)ethoxy]diethylaluminium-$AlEt_3$-Addukt,
[3-(Diethylamino)propoxy]diethylaluminium-$AlEt_3$-Addukt,
[2-(Methoxy)ethoxy]dimethylaluminium-$AlMe_3$-Addukt,
[2-(Methoxy)ethoxy]diethylaluminium-$AlEt_3$-Addukt,
[2-(Ethoxy)ethoxy]diethylaluminium-$AlEt_3$-Addukt,
[3-(Ethoxy)propoxy]diethylaluminium-$AlEt_3$-Addukt,
[2-(Methylthio)ethoxy]dimethylaluminium-$AlMe_3$-Addukt.

**8.** Katalysatorsystem gemäß Anspruch 1, **dadurch gekennzeichnet, daß** das Cokatalysator/Katalysator-Verhältnis im Bereich zwischen 80 : 1 und 1 : 1 liegt.

**9.** Katalysatorsystem gemäß Anspruch 1, **dadurch gekennzeichnet, daß** das Cokatalysator/Katalysator-Verhältnis im Bereich zwischen 20 : 1 und 5 : 1 liegt.

## Claims

**1.** Catalyst systems comprising

a) aluminium alkyl complexes, which are bound to a support material selected from the group consisting of magnesium chloride, $SiO_2$ and $SiO_2$ in combination with $MgCl_2$, as cocatalysts of the formula (I)

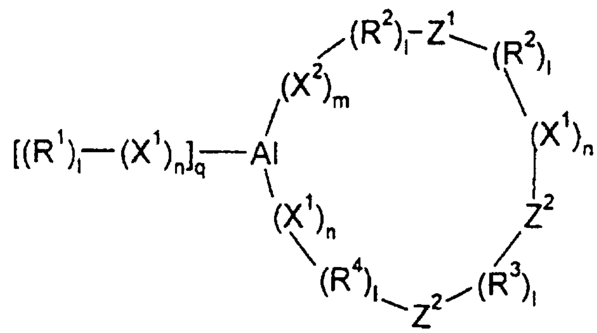 (I)

where

$X^1$ is NH, $NH_2$*, NH-A*, NH-$SiA_3$*, N-A, $NSiA_3$, $N(A)_2$*, $N(SiA_3)_2$*, O, $OSiA_2$, OA*, $OSiA_3$*, OAryl*, S, $SSiA_2$, SA*, $SSiA_3$*, PA, $PSiA_3$, $P(A)_2$*, $P(SiA_3)_2$* or a single bond,
$X^2$ is NH, N-A, $NSiA_3$, O, $OSiA_2$, S, $SSiA_2$, PA or $X^1$ coordinated to $Al(R^1)_3$, or a single bond,
$R^1$ is H; Hal when n = 0; A, if desired covalently bound to Al; $Si(A)_3$ when $X^1$ = O,
$R^2$ is A, if desired covalently bound to Al;

$CH_2$-CH=CH, $CH_2$-C≡C when $Z^1$ = H;

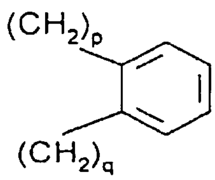

,

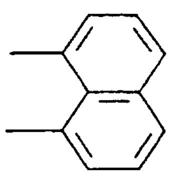 . 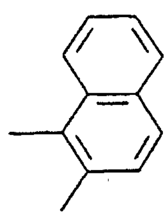 . 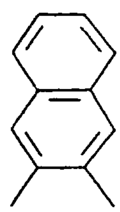 ;

$R^3$ and $R^4$ are each, independently of one another, a bond or $R^2$ or Si (A) $_3$ or Si (A) $_2$,
$Z^1$ is a bond or H bound to $R^2$,
$Z^2$ is a bond or H bound to $R^2$ and $R^3$,

where

A is branched or unbranched $C_1$-$C_7$-alkyl, -alkylidene or -alkenylidene,
Aryl is phenyl, naphthyl, indenyl, fluorenyl,
Hal is F, Cl,
and, independently of one another,
n is 0 or 1,
m is 0 or 1,
p is 0 or 1,
q is 1 or 2,
l is 0 or 1,
where coordinate bonds can exist between $X^1$, $X^2$ and Al, and $R^1$, $R^2$, $R^3$, $R^4$, $X^1$, $X^2$, $Z^1$ and $Z^2$ can, in each case independently of one another at different positions in the molecule, assume all meanings

and $X^1$ can assume only the meanings denoted by "*" when 1 = 0 and $R^1$, $R^2$, $R^3$ or $R^4$ are not present,

b) a catalyst, which is bound to a support material selected from the group consisting of magnesium chloride, $SiO_2$ and $SiO_2$ in combination with $MgCl_2$, selected from the group consisting of titanium halides and vanadium halides and

c) internal and, if desired, also external donors selected from the group consisting of monoesters or diesters or the group consisting of compounds $RSi(OR)_3$ and $R_2Si(OR)_2$, where R are each, independently of one another, a branched or unbranched $C_1$-$C_{10}$-alkyl group.

**2.** Use of a catalyst system according to Claim 1 in heterogeneous polymerizations of α-olefins.

**3.** Use of a catalyst system according to Claim 1 in heterogeneous polymerization reactions of ethylene and propylene.

**4.** Use of a catalyst system according to Claim 1 in polymerization reactions of prochiral olefins.

**5.** Use of a catalyst system according to Claim 1 as stereoselectivity promoter in polymerization reactions of olefins.

**6.** Process for preparing a catalyst system for the polymerization of α-olefins or prochiral olefins, by applying an active species generated from an aluminium compound of the formula (I) and a titanium or vanadium halide to $MgCl_2$, $SiO_2$ or $SiO_2$ in combination with $MgCl_2$ with the addition of an internal or external donor selected from the group consisting of monoesters and diesters or the group consisting of compounds $RSi(OR)_3$ and $R_2Si(OR)_2$, where R are each, independently of one another, a branched or unbranched $C_1$-$C_{10}$-alkyl group.

**7.** Catalyst system according to Claim 1, comprising at least one aluminium alkyl complex of the formula (I) selected from the group consisting of

[3-(dimethylamino)propyl]dimethylaluminium,
[3-(dimethylamino)propyl]methylaluminium chloride,
[3-(diethylamino)propyl]diethylaluminium,
[3-(diethylamino)propyl]dipropylaluminium,
[3-(diethylamino)propyl]dibutylaluminium,
[4-(diethylamino)butyl]dibutylaluminium,
[3-(dimethylamino)propyl]aluminium dichloride,
[2-(dimethylamino)benzyl]diethylaluminium,
[3-(dimethylamino)benzyl]ethylaluminium chloride,
[2,6-bis(dimethylaminomethyl)phenyl]diethylaluminium,
[8-(dimethylamino)naphthyl]dimethylaluminium,
[8-(dimethylamino)naphthyl]diethylaluminium,
1-[3-(dimethylamino)propyl]-1-aluminacyclohexane,
1-[3-(dimethylamino)-2-methylpropyl]-1-aluminacyclohexane,
1-[3-(dimethylamino)propyl]-1-aluminacycloheptane,
bis[3-(dimethylamino)propyl]methylaluminium,
1,5-dimethyl-1-alumina-5-azacyclooctane,
1-ethyl-5-methyl-1-alumina-5-azacyclooctane,
1-alumina-5-azabicyclo[3.3.3]undecane,
[4-(methoxy)butyl]dimethylaluminium,
[3- (ethoxy) propyl] diethylaluminium,
[3-(ethoxy)propyl]dibutylaluminium,
[3-(propoxy)propyl]dibutylaluminium,
[4-(ethoxy)butyl]dibutylaluminium,
[5-(ethoxy)pentyl]dibutylaluminium,
[3-(ethylthiopropyl)diethylaluminium,
[3-(ethylthiopropyl)dibutylaluminium,
bis{[2-(dimethylamino)ethoxy]dimethylaluminium}
bis{[2-(dimethylamino)ethoxy]diethylaluminium}
bis{[2-(diethylamino)ethoxy]diethylaluminium}
bis{[3-(diethylamino)propoxy]diethylaluminium}

bis{[2-(dimethylamino)ethoxy]dibutylaluminium}
bis{[2-(methoxy)ethoxy]dimethylaluminium}
bis{[3-(methoxy)propoxy]dimethylaluminium}
bis{[2-(methoxy)ethoxy]diethylaluminium}
bis{[2-(methoxy)ethoxy]dibutylaluminium}
bis{[2-(butoxy)ethoxy]dimethylaluminium}
bis{[2-(butoxy)ethoxy]dibutylaluminium}
bis{[2-(ethoxy)ethoxy]diethylaluminium}
bis{[2-(phenoxy)ethoxy]dimethylaluminium}
bis{[2-(methoxy)phenoxy]dimethylaluminium}
[2-(diethylamino)ethoxy]diethylaluminium·$AlEt_3$ adduct,
[3-(diethylamino)propoxy]diethylaluminium·$AlEt_3$ adduct,
[2-(methoxy)ethoxy]dimethylaluminium·$AlMe_3$ adduct,
[2-(methoxy)ethoxy]diethylaluminium·$AlEt_3$ adduct,
[2-(ethoxy)ethoxy]diethylaluminium·$AlEt_3$ adduct,
[3-(ethoxy)propoxy]diethylaluminium·$AlEt_3$ adduct,
[2-(methylthio)ethoxy]dimethylaluminium·$AlMe_3$ adduct.

**8.** Catalyst system according to Claim 1, **characterized in that** the cocatalyst/catalyst ratio is in the range from 80:1 to 1:1.

**9.** Catalyst system according to Claim 1, **characterized in that** the cocatalyst/catalyst ratio is in the range from 20:1 to 5:1.

**Revendications**

**1.** Systèmes catalytiques contenant

a) liés à un support choisi dans le groupe constitué par le chlorure de magnésium, $SiO_2$ et $SiO_2$ combiné avec $MgCl_2$, des complexes d'alkylaluminium comme co-catalyseurs de formule générale (I)

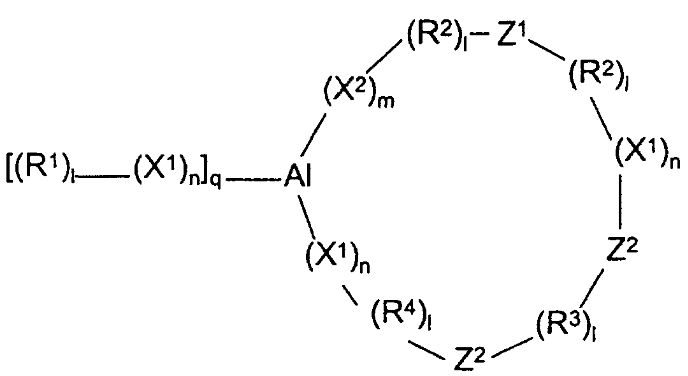

(I)

où

| | |
|---|---|
| $X^1$ | représente NH, $NH_2$*, NH-A*, NH-$SiA_3$*, N-A, $NSiA_3$, $N(A)_2$*, $N(SiA_3)_2$*, O, $OSiA_2$, OA*, $OSiA_3$*, Oaryle*, S, $SSiA_2$, SA*, $SSiA_3$*, PA, $PSiA_3$, $P(A)_2$*, $P(SiA_3)_2$* ou une liaison simple, |
| $X^2$ | NH, N-A, $NSiA_3$, O, $OSiA_2$, S, $SSiA_2$, PA ou $X^1$ lié de façon complexe à $Al(R^1)_3$ ou une liaison simple, |
| $R^1$ | H ; Hal lorsque n = 0 ; A éventuellement lié de façon covalente à Al ; $Si(A)_3$ lorsque $X^1$ = 0, |
| $R^2$ | A éventuellement lié de façon covalente à Al, $CH_2$-CH=CH, $CH_2$-C≡C pour $Z^1$ = H ; |

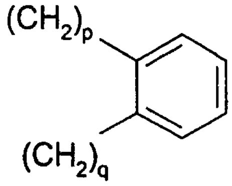

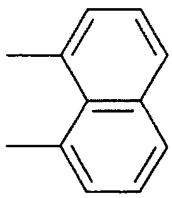

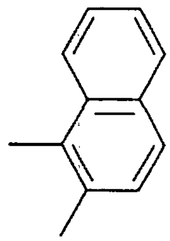

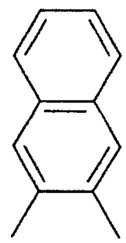

| | |
|---|---|
| $R^3$ et $R^4$ | représentent, indépendamment l'un de l'autre, une liaison ou sont identiques à $R^2$ ou $Si(A)_3$ ou $Si(A)_2$, |
| $Z^1$ | représente une liaison ou H lié à $R^2$, |
| $Z^2$ | une liaison ou H lié à $R^2$ et $R^3$ |
| | avec |
| A | représentant un alkyle, alkylidène ou alcénylidène en $C_1$-$C_7$ ramifié ou non, |
| aryle | les phényle, naphtyle, indényle, fluorényle, |
| Hal | F, Cl |
| | et, indépendamment les uns des autres, |
| n | étant égal à 0, 1, |
| m | à 0, 1, |
| p | à 0, 1, |
| q | à 1, 2, |
| l | à 0, 1, |

des liaisons de coordination pouvant exister entre $X^1$, $X^2$ et Al, $R^1$, $R^2$, $R^3$, $R^4$, $X^1$, $X^2$, $Z^1$ et $Z^2$ pouvant avoir, indépendamment les uns des autres, toutes les significations dans les différentes positions dans la molécule et $X^1$ ne pouvant avoir que les significations **caractérisées par** "*" lorsque l = 0 et $R^1$, $R^2$, $R^3$ ou $R^4$ disparaissent,

b) un catalyseur lié à un support choisi dans le groupe constitué par le chlorure de magnésium, $SiO_2$ et $SiO_2$ combiné avec $MgCl_2$, ledit catalyseur étant choisi dans le groupe constitué par les halogénures de titane et de vanadium et

c) des donneurs internes et éventuellement externes du groupe des composés mono- ou diesters ou du groupe $RSi(OR)_3$ et $R_2Si(OR)_2$, les restes R représentant, indépendamment les uns des autres, un alkyle en $C_1$-$C_{10}$ ramifié ou non.

**2.** Utilisation d'un système catalytique selon la revendication 1 dans les polymérisations hétérogènes des $\alpha$-oléfines.

**3.** Utilisation d'un système catalytique selon la revendication 1 dans les réactions de polymérisation hétérogènes de l'éthylène et du propylène.

**4.** Utilisation d'un système catalytique selon la revendication 1 dans les réactions de polymérisation d'oléfines prochirales.

**5.** Utilisation d'un système catalytique selon la revendication 1 comme agent de stéréosélectivité dans les réactions

de polymérisation des oléfines.

**6.** Procédé pour la préparation d'un système catalytique destiné à la polymérisation des $\alpha$-oléfines ou des oléfines prochirales par application d'une espèce active générée à partir d'un composé d'aluminium de formule générale (I) et d'un halogénure de titane ou de vanadium sur du $MgCl_2$, $SiO_2$ ou $SiO_2$ combiné avec du $MgCl_2$ en additionnant un donneur interne ou externe du groupe des composés mono- ou diesters ou du groupe $RSi(OR)_3$ et $R_2Si(OR)_2$, les restes R représentant, indépendamment les uns des autres, un alkyle en $C_1$-$C_{10}$ ramifié ou non.

**7.** Système catalytique selon la revendication 1, contenant au moins un complexe d'alkylaluminium de formule générale I choisi dans le groupe

[3-(diméthylamino)propyl]diméthylaluminium,
chlorure de [3-(diméthylamino)propyl]méthylaluminium,
[3-(diéthylamino)propyl]diéthylaluminium,
[3-(diéthylamino)propyl]dipropylaluminium,
[3-(diéthylamino)propyl]dibutylaluminium,
[4-(diéthylamino)butyl]dibutylaluminium,
dichlorure de [3-(diméthylamino)propyl]aluminium,
[2-(diméthylamino)benzyl]diéthylaluminium,
chlorure de [2-(diméthylamino)benzyl]éthylaluminium,
[2,6-bis(diméthylaminométhyl)phényl]diéthylaluminium,
[8-(diméthylamino)naphtyl]diméthylaluminium,
[8-(diméthylamino)naphtyl]diéthylaluminium,
1-[3-(diméthylamino)propyl]-1-aluminacyclohexane,
1-[3-(diméthylamino)-2-méthylpropyl]-1-alumininacyclohexane,
1-[3-(diméthylamino)propyl]-1-alumininacycloheptane,
bis[3-(diméthylamino)propyl]méthylaluminium,
1,5-diméthyl-1-alumina-5-azacyclooctane,
1-éthyl-5-méthyl-1-alumina-5-azacyclooctane,
1-alumina-5-azabicyclo(3.3.3)undécane,
[4-(méthoxy)butyl]diméthylaluminium,
[3-(éthoxy)propyl]diéthylaluminium,
[3-(éthoxy)propyl]dibutylaluminium,
[3-(propoxy)propyl]dibutylaluminium,
[4-(éthoxy)butyl]dibutylaluminium,
[5-(éthoxy)pentyl]dibutylaluminium,
[3-(éthylthiopropyl)]diéthylaluminium,
[3-(éthylthiopropyl)]dibutylaluminium,
bis{[2-(diméthylamino)éthoxy]diméthylaluminium},
bis{[2-(diméthylamino)éthoxy]diéthylaluminium}
bis{[2-(diéthylamino)éthoxy]diéthylaluminium},
bis{[3-(diéthylamino)propoxy]diéthylaluminium},
bis{[2-(diméthylamino)éthoxy]dibutyialuminium},
bis{[2-(méthoxy)éthoxy]diméthylaluminium},
bis{[3-(méthoxy)propoxy]diméthylaluminium},
bis{[2-(méthoxy)éthoxy]diéthylaluminium},
bis{[2-(méthoxy)éthoxy]dibutylaluminium},
bis{[2-(butoxy)éthoxy]diméthylaluminium},
bis{[2-(butoxy)éthoxy]dibutylaluminium},
bis{[2-(éthoxy)éthoxy]diéthylaluminium},
bis{[2-(phénoxy)éthoxy]diméthylaluminium},
bis{[2-(méthoxy)phénoxy]diméthylaluminium},
produit d'addition [2-(diéthylamino)éthoxy]diéthylaluminium-$AlEt_3$,
produit d'addition [3-(diéthylamino)propoxy]diéthylaluminium-$AlEt_3$,
produit d'addition [2-(méthoxy)éthoxy]diméthylaluminium-$AlMe_3$,
produit d'addition [2-(méthoxy)éthoxy]diéthylaluminium-$AlEt_3$,
produit d'addition [2-(éthoxy)éthoxy]diéthylaluminium-$AlEt_3$,
produit d'addition [3-(éthoxy)propoxy]diéthylaluminium-$AlEt_3$,

produit d'addition [2-(méthylthio)éthoxy]diméthylaluminium-$AlMe_3$.

8. Système catalytique selon la revendication 1, **caractérisé en ce que** le rapport cocatalyseur/catalyseur est compris entre 80:1 et 1:1.

9. Système catalytique selon la revendication 1, **caractérisé en ce que** le rapport cocatalyseur/catalyseur est compris entre 20:1 et 5:1.